Europäisches Patentamt

European Patent Office

Office européen des brevets

(19)

(11) Publication number: **0 044 656**
**A1**

(12) **EUROPEAN PATENT APPLICATION**

(21) Application number: **81303085.5**

(22) Date of filing: **07.07.81**

(51) Int. Cl.³: **F 02 P 5/04**

(30) Priority: **10.07.80 GB 8022568**

(43) Date of publication of application:
**27.01.82 Bulletin 82/4**

(84) Designated Contracting States:
**DE FR GB IT**

(71) Applicant: **LUCAS INDUSTRIES LIMITED**
**Great King Street**
**Birmingham, B19 2XF(GB)**

(72) Inventor: **Harris, Paul Anthony**
**38 Heath Close**
**Stonnall Walsall West Midlands(GB)**

(72) Inventor: **Toller, Andrew Peter**
**101 Union Road**
**Shirley Solihull West Midlands(GB)**

(74) Representative: **Prutton, Roger et al,**
**MARKS & CLERK Alpha Tower A.T.V.Centre**
**Birmingham B1 1TT(GB)**

(54) Method of and apparatus for optimising the operation of an internal combustion engine.

(57) I.C. engine performance is optimised by imposing a cyclically fluctuating trim on a control input in synchronism with engine operation and measuring the effect of the trim on engine speed. A store (16) holds an average value of the control input (e.g. spark timing) and the trim is applied by a calculator circuit 14 to increment and decrement the counter content periodically in synchronism with the engine. A counter (18) counts clock pulses in a sequence which yields a residual count enabling the content of the store (16) to be changed if this residual count indicates that advancing or retarding timing will increase engine speed.

FIG.1

EP 0 044 656 A1

This invention relates to a method of and apparatus
for optimising the operation of an internal combustion
engine.

For example, in the case of an internal combustion
engine system it is desired to optimise spark timing, which
involves ensuring that the spark timing is such as to give
maximum engine speed in the prevailing load/fuelling conditions, since the fuel economy is then at its maximum value
for those conditions.

However, the invention can also be applied to the fuelling control of an engine to ensure that the air/fuel ratio
is such as to give maximum engine speed.

In accordance with the invention there is provided a
method of optimising the operation of an internal combustion
engine by varying an engine control input which controls
cyclically occurring engine events to obtain maximum engine
speed in prevailing conditions, comprising establishing an
average value for said control input, imposing a cyclically
fluctuating trim on said control input in synchronism with
the engine events, measuring the effect of the trim on the
engine speed over a cycle thereof and adjusting said average
value in accordance with such measurement.

Where the cyclically occurring engine event is ignition spark generation, the control input determines the
timing of such spark generation with respect to engine shaft
position. A cycle of fluctuating trim of the spark timing
could consist of allowing the engine to run for two revolutions at the established average timing, for two revolutions
at a relatively advanced timing, for two revolutions at the
average timing again and finally two revolutions at a relatively retarded timing. Measurement of the effect of the trim
on speed can be carried out by counting fixed frequency pulses
during each segment of the trim cycle with the direction of
counting being reversed after the first segment and returned to the original direction after the third segment. In steady state conditions, with the engine running at maximum the result of this counting sequence will be approximately zero, but if either advancing or retarding the spark timing has the effect of increasing the engine speed the final count will differ from zero in one direction or the other enabling this result to be used to alter the average timing for the next cycle.

In a fuelling control system the control input can be used to move an air admission valve to vary the air/fuel ratio. The same trim cycle is applied as in ignition timing control and the same measurement made, the resulting count be used to adjust the average position of the air admission valve.

In accordance with another aspect of the invention there is provided an engine control apparatus comprising control means having a control input and operating to control cyclically occurring engine events, store means for storing a signal corresponding to an average value of a control signal for application to said control input, means for superimposing a cyclically varying trim signal varying in synchronism with the engine events, and means for detecting the effect of said trim signal on the engine speed and operating to change the signal stored in the store means.

In the accompanying drawings;

Figure 1 is a block diagram showing an example of the invention as applied to a spark ignition system and

Figure 2 is a block diagram of an example of the invention as applied to a fuel/air ratio control system.

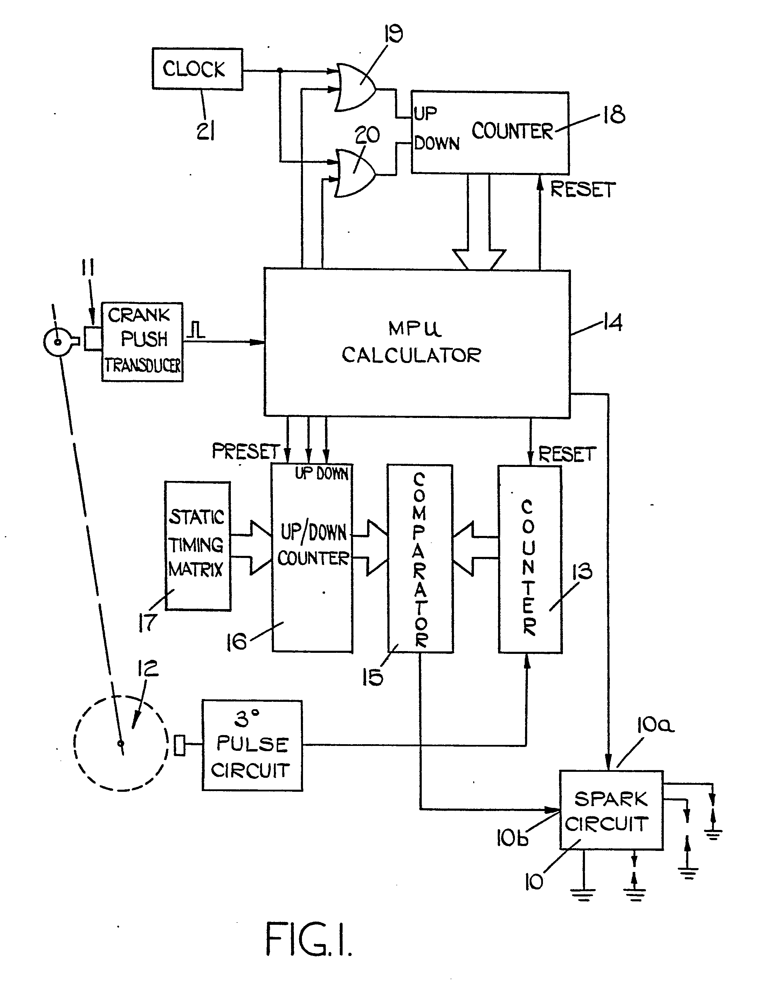

Referring firstly to Figure 1 the circuit shown includes a spark circuit 10 of any convenient known form which includes energy storage means brought into operation by a signal at one input 10a and which is triggered to to produce a spark by a trigger pulse at another input 10b.
Circuits for this purpose are well known and need not be
described in detail herein.

The circuit also includes two crankshaft position
transducer devices 11, 12. The device 11 is driven by the
crankshaft and produces one pulse per compression at a
specific position of that shaft. The other transducer 12
is associated with teeth on the engine flywheel and produces
one pulse for each $3^o$ (approximately) of crankshaft rotation.

The pulses from the transducer 12 are applied to a
counter 13 which has its RESET input connected to one output
of a microprocessor based calculator circuit 14. The digital
output of the counter 13 is applied to one set of data
input terminals of a digital comparator 15. The other set
of data input terminals of which are connected to the digital
output of a presettable up/down counter 16. The A=B output
of comparator 15 is connected to the trigger input 10a of
the spark circuit 10. A static timing matrix 17 is connected to the preset data inputs of the counter 16 to set counter
17 to a spark timing count state suitable for idling
conditions whenever an input is received at the PRESET input
of the counter 16 from the circuit 14. The UP and DOWN
clock inputs of counter 16 are also connected to further
outputs of the circuit 14.

The circuit 14 is connected to receive pulses from the
transducer 11 at one of its inputs and also receives a multibit digital input from another up/down counter 18. The
RESET terminal of counter 18 is connected to another output
of circuit 15 and two further outputs of circuit 15 control
two gates 19, 20 which connect a fixed frequency clock
21 to the respective UP and DOWN clock inputs of counter 18.

When the calculator circuit 14 measures that the length of time between pulses from the transducer 11 exceeds a predetermined limit it outputs a "preset" pulse to the counter 16 causing it to take up the count state dictated by the matrix 17. At all other times counter 16 acts as a store, storing the currently required "average" ignition timing count state. The calculator circuit 14 delivers up and down clock pulses to counter 16 to vary the stored count as explained hereinafter.

In each ignition cycle the counter 13 is first reset by the calculator circuit 14 on receipt of each pulse from the transducer 11. Counter 13 then counts the pulses from the transducer 12 until the number counted is equal to the count currently stored in counter 16, whereupon comparator 15 outputs a pulse to trigger the spark circuit 10.

The calculator circuit 14 also controls the gates 19 and 20 to measure the effect on the engine speed of timing fluctuations which are superimposed on the "average" timing. Each complete cycle of timing fluctuations takes place over eight crankshaft revolutions, and each such cycle has four phases. A cycle starts on receipt of a given crank position pulse from transducer 11, the counter 16 is set to the currently prevailing "average" value and the calculator circuit 14 enables gate 19. Circuit 14 now counts the subsequent pulses from the transducer 11 and on receipt of the fourth such pulse, the circuit 14 outputs a single pulse to the down input of counter 16 and enables gate 20 instead of gate 19. This has the effect of advancing the spark timing by $3^\circ$ relative to the average timing. Counter 18 now counts down from the count value achieved during the first phase. If the engine speed increases the time taken for four pulses to be received by the circuit 14 will be less in the second phase than in the first so that the count will not return exactly to zero. If the speed decreases the count will fall below zero, i.e. after zero the binary count will change to 111...11 and counting down will continue
to some lower value. In the third phase, again four pulses
from transducer 11, the counter 16 is returned to the
"average" count state, but gate 20 remains enabled. Thus
the counter 18 continues to count down to some new value
dependent on the length of time taken for four pulses to be
produced by transducer 11. Finally, in the fourth phase the
count in counter 16 is increased by one count (to retard
the spark timing by $3^\circ$) and gate 19 is enabled so that
counter 18 counts up again. At the end of the cycle, the
count of counter 18 is read into the circuit 14 and counter
18 is reset so that the next cycle can commence.

The calculator circuit 14 now analyses the count
received from the counter 18 and adjusts the average timing
count according to the value of this count. Thus, in a
simple arrangement, the calculator circuit 14 decreases the
stored count in counter 16 by one if the most significant
bit of the count received from counter 18 is zero and
increases the stored count by one if this msb is one. With
more complex programming the calculator could distinguish
between errors of different sizes. Thus, if the count
received were within a few counts of zero (in either
direction) the average timing could be left unchanged. A
single step change in the timing could be made for moderate
errors and two or more steps for larger errors. This
would involve analysing all the bits of the count received
from counter 18.

It will be appreciated that the cyclically varying
fluctuations which are superimposed on the stored "average"
timing value are synchronous with the ignition events.
Exactly the same number of ignition events occur in each
cycle so that at low speed the cycle time is long and at
high speed the cycle time is short. If non-synchronous
fluctuations, i.e. fluctuations imposed at a fixed frequency,
were used then the choice of frequency would of necessity
be a compromise with the result that the slew rate of the system - i.e. that rate at which the timing could be changed - would be low. With the synchronous system described above the slew rate increases with engine speed.

The use of synchronous fluctuations and three level timing changes in each cycle gives rise to the advantage that both rapid response to changes in load and stable operation can be obtained.

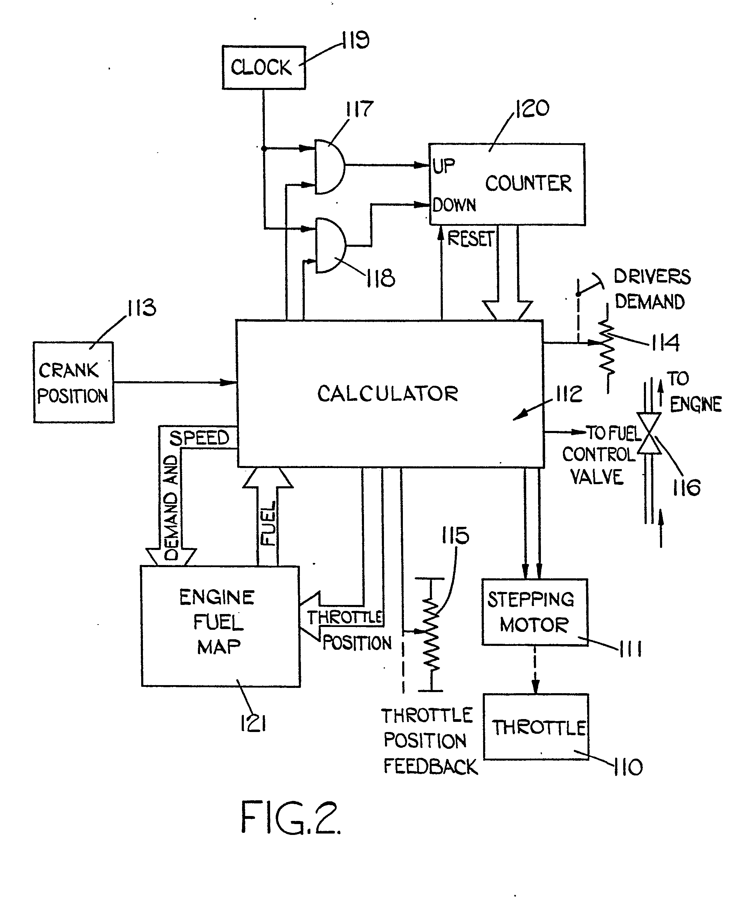

Turning now to Figure 2, the air/fuel ratio control system shown therein makes use of a servo-throttle arrangement in which the air intake throttle valve 110 of the engine is driven both open and closed by a stepper motor 111 which effectively provides a store which stores mechanically the "average" throttle position for the prevailing speed/fuel/ load conditions. The stepper motor is controlled by a calculator circuit 112 which receives inputs from a transducer 113 (corresponding to transducer 11 of Figure 1),from a drivers demand potentiometer 114, from a throttle position feedback potentiometer 115 and from a  ROM 121 containing an engine fuel requirement "map" for different values of the throttle position signal, the drivers demand signal and engine speed. The "map" determines the fuel requirement and the circuit 112 controls a fuel flow valve 116 in accordance with the "map".

In addition two gates 117, 118 a clock 119 and a counter 120 are provided which correspond to the like parts 19, 20, 21 and 18 respectively in Figure 1.

In the example shown in Figure 2 the synchronous fluctuation cycle is applied to the stepper motor 111 and it is the position of this motor which is corrected to give maximum speed after each cycle.

It will be appreciated that it is possible to modify the embodiments described in many ways. For example, it would be possible to use four of the counters 18 of Figure 1 which are reset at the ends of different ones of the phases of the fluctuation cycle so that the "average" value can be updated every two crankshaft revolutions instead of eight. With this arrangement, however, it is necessary to take into account changes which occur during any given cycle when analysing the residual count from any one of the counters.

It is all possible to combine air/fuel ratio optimisation and ignition timing optimisation for example by time-sharing i.e. hold ignition timing at "average" during alternate eight-revolution cycles and optimising air/fuel ratio, and holding air/fuel ratio at "average" during the remaining cycles and optimising ignition timing. In this way it is possible to distinguish between the effects of the fluctuations of the two controls (i.e. ignition timing and air/fuel ratio).

CLAIMS

1.    A method of optimising the operation of an internal
combustion engine by varying an engine control input which
controls cyclically occurring engine events to obtain
maximum engine speed in prevailing conditions, comprising
establishing an average value for said control input,
imposing a cyclically fluctuating trim on said control input
in synchronism with the engine events, measuring the effect
of the trim on the engine speed over a cycle thereof and
adjusting said average value in accordance with such measurement.

2.    A method as claimed in claim 1 in which said cyclically fluctuating trim consists of allowing the engine to run
for two revolutions with the control input at the established average value for two revolutions with the control input
changed in one direction from the established average value,
for two revolutions at the established average value again
and finally for two further revolutions with the control
input changed in the opposite direction.

3.    A method as claimed in claim 2 in which measurement
of the effect of the trim on engine speed is carried out by
counting fixed frequency pulses in one direction for said
first-mentioned two engine revolutions, in the opposite
direction for the next four engine revolutions and in the
original direction for the final two revolutions, the
residual count indicating whether the engine speed can be
increased by changing said control input.

4.    A method as claimed in claim 2 or claim 3 in which
the control input determines the timing of spark ignition
with respect to engine shaft position, ignition being
advanced in the second period of two engine revolutions and
retarded in the fourth such period.

5.    A method as claimed in claim 2 or claim 3 in which the
control input determines the position of an air input
valve so as to vary the fuel/air ratio.

6.    Engine control apparatus comprising control means
having a control input and operating to control cyclically
occurring engine events, store means for storing a signal
corresponding to an average value of a control signal for
application to said control input, means for superimposing
a cyclically varying trim signal varying in synchronism with
the engine-events, and means for detecting the effect of
said trim signal on the engine speed and operating to change
the signal stored in the store means.

7.    Apparatus as claimed in claim 6 in which the control
means controls spark ignition timing and the store means
comprises a counter connected to said effect detecting
means so as to have its content changed thereby in accordance with the effect detected, the counter content determining the timing of spark ignition relative to engine
shaft position.

8.    Apparatus as claimed in claim 7 in which said means
for superimposing a cyclic trim operates to increment the
counter content in one period of operation and to decrement
the counter content in another period, such periods being
separated by periods in which the counter content is at its
established average value.

9. Apparatus as claimed in claim 8 in which the effect detecting means comprises a clock pulse source, a further reversible counter connected to said clock pulse source so as to count pulses therefrom and means controlling the direction of counting such that said further counter counts in one direction in a first period of average timing, in the opposite direction during a following period of advanced timing and a following period of average timing and in the original direction during a final period of retarded timing, the residual count at the end of the cycle of four periods determining any adjustment of the content of the first mentioned counter.

FIG.I.

0044656

FIG.2.

0044656

European Patent
Office

EUROPEAN SEARCH REPORT

Application number

EP 81 30 3085.5

| Category | Citation of document with indication, where appropriate, of relevant passages | Relevant to claim |
|---|---|---|
| | US - A - 4 026 251 (P.H. SCHWEITZER) <br> * complete document * <br> -- | 1,4-7, <br> 9 |
| | DE - A - 2 801 641 (HITACHI) <br> * page 22, line 5 to page 28, line 5; <br> fig. 7 * <br> -- | 1,4,6, <br> 7,9 |
| | FR - A - 2 341 867 (R. BOSCH) <br> * page 4, line 14 to page 11, line 7; <br> fig. 1 to 5 * <br> -- | 1 |
| A | US - A - 3 142 967 (P.H. SCHWEITZER) <br> -- | 1 |
| A | FR - A - 2 337 261 (INSTITUT FRAN- <br> CAIS DU PETROLE) <br> ---- | 1 |

**DOCUMENTS CONSIDERED TO·BE RELEVANT**

**CLASSIFICATION OF THE APPLICATION (Int. Cl.³)**

F 02 P 5/04

**TECHNICAL FIELDS SEARCHED (Int. Cl.³)**

F 02 P 5/04

F 02 P 5/08

**CATEGORY OF CITED DOCUMENTS**

X: particularly relevant
A: technological background
O: non-written disclosure .
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 11-10-1981 | BORRELLY |

EPO Form 1503.1 06.78